# EUROPEAN PATENT SPECIFICATION

(11) **EP 0 316 874 B1**
(45) Date of publication and mention of the grant of the patent: **16.02.1994**
(21) Application number: 88119031.8
(22) Date of filing: 15.11.1988
(51) Int. Cl.: C09D 163/00, C08G 59/42, C08G 59/62

(54) **Reactive coatings**
Reaktive Beschichtungen
Revêtements réactifs

(30) Priority: 16.11.1987 US 120887
(43) Date of publication of application: 24.05.1989
(73) Proprietor: THE SHERWIN-WILLIAMS COMPANY, Cleveland Ohio 44115-1075 (US)
(72) Inventor: Shalati, Mohamad D., Richton, IL 60471 (US); Marquart, James A., Chicago Heights, IL 60411 (US); Babjak, John R., Tinley Park, IL 60477 (US); Harris, Rodney M., Chicago, IL 60614 (US)
(74) Representative: Abitz, Walter, Dr.-Ing.

(56) References cited:
- EP-A- 0 134 691
- FR-A- 1 418 795

## Description

### BACKGROUND OF THE INVENTION

### 1. Field of the Invention.

This invention relates to novel reactive coatings which can be cured at room temperature or force dried at temperatures ranging up to about 177°C (350°F). The coatings may be utilized as primers, topcoats or as clearcoats and/or basecoats in clearcoat/basecoat compositions. The combination of hydroxy-functional compounds, anhydride-functional compounds, and epoxy-functional compounds, especially cycloaliphatic epoxy compounds, provides fast reacting, durable coatings which minimize the toxicity problems which may be associated with other low temperature curing systems.

### 2. Description of the Prior Art.

One approach to high performance low temperature curing coatings has involved two component coatings comprising reactive isocyanates and active hydrogen containing compounds such as hydroxyl containing polymers or amine containing polymers to produce urethane or urea coatings. Although these materials have excellent performance and cure at low temperatures, the isocyanates may, under some conditions, be relatively hazardous to handle.

Coating compositions comprising reactive combinations of epoxy containing compounds and compounds having acid or amine functionality are known in the art. Similarly, coating compositions comprising cyclic anhydrides and hydroxy-functional compounds are also known in the art.

Furthermore, EP-A-0,134,691 discloses compositions capable of curing at ambient or slightly elevated temperatures which comprise (i) a compound containing in the molecule at least two hydroxyl groups, in particular a hydroxyl group-bearing addition polymer, (ii) a compound containing in the molecule at least two cyclic carboxylic anhydride groups and (iii) a compound containing in the molecule at least two epoxide groups and which are of particular value as the basis of room-temperature-curing coating compositions. There is, however, no indication that monoepoxy compounds can be used instead of compounds which have at least two epoxide groups and that compositions containing monoepoxy compound would provide longer gel times and increased initial hardness.

### BRIEF SUMMARY OF THE INVENTION

The present invention relates to a curable composition comprising:
(i) an anhydride-functional polymer having a number average weight of preferably at least 500 and having an average of at least two cyclic carboxylic acid anhydride groups per molecule and being the addition polymerization reaction product of maleic anhydride and at least one other copolymerizable ethylenically unsaturated monomer selected from esters of unsaturated acids, vinyl compounds, styrene-based materials, allyl compounds, unsaturated monomers having free carboxylic acid groups, acrylonitrile, methacrylonitrile, dimethyl maleate, isopropenyl acetate, isopropenyl isobutyrate, acrylamide, methacrylamide, dienes; and
(ii) an epoxy-functional compound; and
(iii) a hydroxy-functional compound having an average of at least two hydroxyl groups per molecule and being selected from an acrylic polymer or a polyester polymer;
wherein at least one of the compounds (i), (ii), or (iii) comprises a film-forming polymer, and where in the compounds are each present in a level to provide 0.3 to 6.0 hydroxyl groups and 0.3 to 6.0 epoxy groups for each anhydride group, characterized in that the epoxy-functional compound has one group per molecule and is selected from monoglycidyl ethers of aliphatic or aromatic alcohols, monoepoxy esters, unsaturated monoepoxy esters, monoepoxidized oils, aryl monoepoxies and aliphatic monoepoxies.

The term "compound" is used in its broadest sense to include monomers, oligomers, and polymers. The term "film forming polymer" means any polymeric material that can form a film from evaporation of any carrier or solvent.

In its most preferred formulation, this invention relates to curable compositions wherein the hydroxy-functional compound is a polymer prepared by the free radical addition polymerization of one or more monomers, at least one of which contains or can be reacted to produce a reactive hydroxyl group; and wherein the anhydride-functional compound is the addition polymerization product of at least one unsaturated monomer having anhydride functionality, especially maleic anhydride, and at least one other ethylenically unsaturated monomer.

It is especially preferred to utilize the curable composition of this invention in combination with from about 5 to about 80%, and especially 5 to about 50%, by weight of an inert solvent, such as ketones, esters, and aromatic or aliphatic hydrocarbons. It is convenient to provide the coating composition as a two-component system wherein the anhydride-functional compound provides one package and the hydroxy-functional compound and the epoxy-functional compound provide a second package. The two components can be mixed prior to application to provide the curable coatings.

In one preferred application, this invention relates to coated substrates having a multi-layer decorative and/or protective coating which comprises:
(a) a basecoat comprising a pigmented film-forming polymer; and
(b) a transparent clearcoat comprising a film-forming polymer applied to the surface of the basecoat composition;
wherein the clearcoat and/or the basecoat comprises the curable compositions of this invention.

Accordingly, it is an object of this invention to provide improved curable compositions having excellent reactivity at low temperatures. It is a further object of this invention to provide coating compositions which may be utilized as primers, topcoats or clearcoats and/or basecoats in clearcoat/basecoat compositions. Another object of this invention is to provide an improved two-component coating composition wherein one component comprises an anhydride-functional compound and the other component comprises a hydroxy-functional compound and an epoxy-functional compound. Another object of this invention is to provide coatings having excellent exterior durability and corrosion resistance. A further object of this invention is to provide improved coating compositions which can be cured at room temperature or force dried at elevated temperatures. These and other objects of the invention will become apparent from the following discussions.

### DETAILED DESCRIPTION OF THE INVENTION

### 1. HYDROXY-FUNCTIONAL COMPOUNDS

The hydroxy-functional compounds which are useful in the practice of this invention have an average of at least two hydroxyl groups per molecule.

Preferably the hydroxy-functional polymer will have a number average molecular weight of at least about 400. Typical number average molecular weights will range from about 400 to about 30,000, and especially 500 to about 7,000. In order to provide the fastest rate of reaction during cure it is preferred in the practice of this invention to utilize hydroxy-functional compounds having predominantly, and preferably all, primary hydroxyl functionality.

Representative hydroxy-functional polymers include those described in Sections 1.1 and 1.2 below:
1.1. A useful class of hydroxy-functional polymers are those prepared by condensation polymerization reaction techniques as are well known in the art. Representative condensation polymerization reactions include polyesters prepared by the condensation of polyhydric alcohols and polycarboxylic acids or anhydrides, with or without the inclusion of drying oil, semi-drying oil, or non-drying oil fatty acids. By adjusting the stoichiometry of the alcohols and the acids while maintaining an excess of hydroxyl groups, hydroxy-functional polyesters can be readily produced to provide a wide range of desired molecular weights and performance characteristics.
   The polyester polyols are derived from one or more aromatic and/or aliphatic polycarboxylic acids, the anhydrides thereof, and one or more aliphatic and/or aromatic polyols. The carboxylic acids include the saturated and unsaturated polycarboxylic acids and the derivatives thereof, such as maleic acid, fumaric acid, succinic acid, adipic acid, azelaic acid, and dicyclopentadiene dicarboxylic acid. The carboxylic acids also include the aromatic polycarboxylic acids, such as phthalic acid, isophthalic acid, terephthalic acid, etc. Anhydrides such as maleic anhydride, phthalic anhydride, trimellitic anhydride, or Nadic Methyl Anhydride (brand name for methylbicyclo[2.2.1]heptene-2,3-dicarboxylic anhydride isomers) can also be used.
   Representative saturated and unsaturated polyols which can be reacted in stoichiometric excess with the carboxylic acids to produce hydroxy-functional polyesters include diols such as ethylene glycol, dipropylene glycol, 2,2,4-trimethyl 1,3-pentanediol, neopentyl glycol, 1,2-propanediol, 1,4-butanediol, 1,3-butanediol 2,3-butanediol, 1,5-pentanediol, 1,6-hexanediol, 2,2-dimethyl-1,3-propanediol, 1,4-cyclohexanedimethanol, 1,2-cyclohexanedimethanol, 1,3-cyclohexanedimethanol, 1,4-bis(2-hydroxyethoxy)cyclohexane, trimethylene glycol, tetramethylene glycol, pentamethylene glycol, hexamethylene glycol, decamethylene glycol, diethylene glycol, triethylene glycol, tetraethylene glycol, norbornylene glycol, 1,4-benzenedimethanol, 1,4-benzenediethanol, 2,4-dimethyl-2-ethylenehexane-1,3-diol, 2-butene-1,4-diol, and polyols such as trimethylolethane, trimethylolpropane, trimethylolhexane, triethylolpropane, 1,2,4-butanetriol glycerol, pentaerythritol, dipentaerythritol, etc.
   Typically, the reaction between the polyols and the polycarboxylic acids is conducted at about 120°C to about 200°C in the presence of an esterification catalyst such as dibutyl tin oxide.
1.2 Useful hydroxy-functional polymers can also be conveniently prepared by free radical polymerization techniques such as in the production of acrylic resins. The polymers are typically prepared by the addition polymerization of one or more monomers. At least one of the monomers will contain, or can be reacted to produce, a reactive hydroxyl group. Representative hydroxy-functional monomers include 2-hydroxyethyl acrylate, 2-hydroxypropyl acrylate, 4-hydroxybutyl methacrylate, 2-hydroxypropyl methacrylate, 3-hydroxybutyl acrylate, 4-hydroxypentyl acrylate, 2-hydroxyethyl ethacrylate, 3-hydroxybutyl methacrylate, 2-hydroxyethyl chloroacrylate, diethylene glycol methacrylate, tetraethylene glycol acrylate, para-vinyl benzyl alcohol, etc. Typically the hydroxy-functional monomers would be copolymerized with one or more monomers having ethylenic unsaturation such as:
   (i) esters of acrylic, methacrylic, crotonic, tiglic, or other unsaturated acids such as: methyl acrylate, ethyl acrylate, propyl acrylate, isopropyl acrylate, butyl acrylate, isobutyl acrylate, ethylhexyl acrylate, amyl acrylate, 3,5,5-trimethylhexyl acrylate, methyl methacrylate, ethyl methacrylate, propyl methacrylate, isobornyl methacrylate, dimethylaminoethyl methacrylate, ethyl tiglate, methyl crotonate, ethyl crotonate, etc.;
   (ii) vinyl compounds such as vinyl acetate, vinyl propionate, vinyl butyrate, vinyl isobutyrate, vinyl benzoate, vinyl m-chlorobenzoate, vinyl p-methoxybenzoate, vinyl alpha-chloroacetate, vinyl toluene, vinyl chloride, etc.;
   (iii) styrene-based materials such as styrene, alpha-methyl styrene, alpha-ethyl styrene, alpha-bromo styrene, 2,6-dichlorostyrene, etc.;
   (iv) allyl compounds such as allyl chloride, allyl acetate, allyl benzoate, allyl methacrylate, etc.;
   (v) other copolymerizable unsaturated monomers such as acrylonitrile, methacrylonitrile, dimethyl maleate, isopropenyl acetate, isopropenyl isobutyrate, acrylamide, methacrylamide, and dienes such as 1,3-butadiene, etc.
   The polymers are conveniently prepared by conventional free radical addition polymerization techniques. Frequently, the polymerization will be initialized by conventional initiators known in the art to generate a free radical such as azobis(isobutyronitrile), cumene hydroperoxide, t-butyl perbenzoate, etc. Typically, the acrylic monomers are heated in the presence of the initiator at temperatures ranging from about 35°C to about 200°C, and especially 75°C to 150°C, to effect the polymerization. The molecular weight of the polymer can be controlled, if desired, by the monomer selection, reaction temperature and time, and/or the use of chain transfer agents as is well known in the art.

An especially preferred hydroxy-functional polymer is the addition polymerization reaction product of (a) 10 to about 40 weight percent of a hydroxy-functional ethylenically unsaturated monomer and (b) 60 to about 90 weight percent of at least one ethylenically unsaturated monomer copolymerizable with the hydroxy-functional monomer.

### 2. ANHYDRIDE-FUNCTIONAL COMPOUNDS

The anhydride-functional compounds which are useful in the practice of this invention are anhydride-functional polymers having a number average weight of preferably at least 500 and having an average of at least two cyclic carboxylic acid anhydride groups per molecule and being the addition polymerization reaction product of maleic anhydride and at least one other copolymerizable ethylenically unsaturated monomer selected from esters of unsaturated acids, vinyl compounds, styrene-based materials, allyl compounds, unsaturated monomers having free carboxylic acid groups, acrylonitrile, methacrylonitrile, dimethyl maleate, isopropenyl acetate, isopropenyl isobutyrate, acrylamide, methacrylamide, dienes. Polymeric anhydrides having number average molecular weights between 500 and 7,000 are most useful. These polymers are conveniently prepared as is well known in the art by polymerizing maleic anhydride with the other above-mentioned ethylenically unsaturated monomers, as representatively taught in Section 1.2 above.

### 3. EPOXY-FUNCTIONAL COMPOUNDS

The coatings of this invention also require the use of at least one epoxy-functional compound namely a monoepoxy compound.

Representative useful monoepoxides include the monoglycidyl ethers of aliphatic or aromatic alcohols such as butyl glycidyl ether, octyl glycidyl ether, nonyl glycidyl ether, decyl glycidyl ether, dodecyl glycidyl ether, p-tert-butylphenyl glycidyl ether, and o-cresyl glycidyl ether. Monoepoxy esters such as the glycidyl ester of versatic acid (commercially available as CARDURA® E from Shell Chemical Company), or the glycidyl esters of other acids such as tertiary-nonanoic acid, tertiary-decanoic acid, tertiary-undecanoic acid, etc. are also useful. Similarly, if desired, unsaturated monoepoxy esters such as glycidyl acrylate, glycidyl methacrylate or glycidyl laurate could be used. Additionally, monoepoxidized oils can also be used.

Other useful monoepoxies include styrene oxide, cyclohexene oxide, 1,2-butene oxide, 2,3-butene oxide, 1,2-pentene oxide, 1,2-heptene oxide, 1,2-octene oxide, 1,2-nonene oxide, 1,2-decene oxide.

It is only necessary that the monoepoxide compounds have a sufficiently low volatility to remain in the coating composition under the applicable conditions of cure.

The ratios of anhydride to hydroxyl to epoxy groups can be widely varied within the practice of this invention. The compounds (i), (ii) and (iii) are present at a level to provide 0.3 to 6.0 hydroxyl groups and 0.3 to 6.0 epoxy groups for each anhydride group in the reactive system. It is preferred to provide 0.5 to 1.5 hydroxyl groups and 0.5 to 1.5 epoxy groups for each anhydride group. At least one of the hydroxy-functional compound, the epoxy-functional compound, or the anhydride-functional compound should be a film forming polymer, and each of the compounds should be mutually soluble with the other compounds.

The coatings of this invention can be cured at temperatures ranging from about room temperature up to about 177°C (350°F). The coatings can be used as clear coatings or they may contain pigments as is well known in the art. Representative opacifying pigments include white pigments such as titanium dioxide, zinc oxide, antimony oxide, etc. and organic or inorganic chromatic pigments such as iron oxide, carbon black, phthalocyanine blue, etc. The coatings may also contain extender pigments such as calcium carbonate, clay, silica, talc, etc.

The coatings may also contain other additives such as flow agents, catalysts, diluents, solvents, ultraviolet light absorbers, etc.

It is especially preferred in the practice of this invention to include a catalyst for the reaction of anhydride groups and hydroxyl groups and also a catalyst for the reaction of epoxy and acid groups. It is especially preferred in the practice of this invention to utilize tertiary amines and especially N-methylimidazole as a catalyst for the anhydride/hydroxyl reaction. The catalyst for the anhydride/hydroxyl reaction will typically be present at a level of at least 0.01% by weight of the anhydride compound and preferably 1.0 to about 5.0%.

Tertiary amines, secondary amines such as ethyl imidazole, quaternary ammonium salts, nucleophilic catalysts, such as lithium iodide, phosphonium salts, and phosphines such as triphenyl phosphine are especially useful as catalysts for epoxy/acid reactions. Electrophillic catalysts, such as tin metal salts or complexes, are also useful in the practice of this invention. The catalyst for the epoxy/acid reaction will typically be present at a level of at least 0.01% by weight of the total acid-functional compound and epoxy-functional compound and, preferably, will be present at 0.1 to about 3.0%.

The coatings of this invention may typically be applied to any substrate such metal, plastic, wood, glass, synthetic fibers, etc. by brushing, dipping, roll coating, flow coating, spraying or other method conventionally employed in the coating industry. If desired, the substrates may be primed prior to application of the coatings of this invention.

One preferred application of the curable coatings of this invention relates to their use as clearcoats in clearcoat/basecoat formulations.

Clearcoat/basecoat systems are well known, especially in the automobile industry where it is especially useful to apply a pigmented basecoat, which may contain metallic pigments, to a substrate and allow it to form a polymer film followed by the application of a clearcoat which will not mix with or have any appreciable solvent attack upon the previously applied basecoat. The basecoat composition may be any of the polymers known to be useful in coating compositions including the reactive compositions of this invention.

One useful polymer basecoat includes the acrylic addition polymers, particularly polymers or copolymers of one or more alkyl esters of acrylic acid or methacrylic acid, optionally together with one or more other ethylenically unsaturated monomers. These polymers may be of either the thermoplastic type or the thermosetting, crosslinking type which contain hydroxyl or amine or other reactive functionality which can be crosslinked. Suitable acrylic esters and unsaturated monomers for either type of polymer include methyl methacrylate, ethyl methacrylate, propyl methacrylate, butyl methacrylate, ethyl acrylate, butyl acrylate, vinyl acetate, acrylonitrile, acrylamide, styrene, vinyl chloride, etc. Where the polymers are required to be of the crosslinking type, suitable functional monomers which can be used in addition to those already mentioned include acrylic or methacrylic acid, hydroxy ethyl acrylate, 2-hydroxy propyl methacrylate, glycidyl acrylate, tertiary-butyl amino ethyl methacrylate, etc. The basecoat composition may, in such a case, also contain a crosslinking agent such as a polyisocyanate, a polyepoxide, or a nitrogen resin such as a condensate of an aldehyde such as formaldehyde with a nitrogeneous compound such as urea, melamine or benzoguanamine or a lower alkyl ether of such a condensate. Other polymers useful in the basecoat composition include vinyl copolymers such as copolymers of vinyl esters of inorganic or organic acids, such as vinyl chloride, vinyl acetate, vinyl propionate, etc., which copolymers may optionally be partially hydrolyzed so as to introduce vinyl alcohol units.

Other polymers useful in the manufacture of the basecoat include alkyd resins or polyesters which can be prepared in a known manner by the condensation of polyhydric alcohols and polycarboxylic acids, with or without the inclusion of natural drying oil fatty acids as described elsewhere in this specification. The polyesters or alkyds may contain a proportion of free hydroxyl and/or carboxyl groups which are available for reaction, if desired with suitable crosslinking agents as discussed above.

If desired, the basecoat composition may also contain minor amounts of a cellulose ester, to alter the drying or viscosity characteristics of the basecoat.

Typically, the basecoat will include pigments conventionally used for coating compositions and after being applied to a substrate, which may or may not previously have been primed, the basecoat will be allowed sufficient time to form a polymer film which will not be lifted during the application of the clearcoat. The basecoat may be heated or merely allowed to air-dry to form the film. Generally, the basecoat will be allowed to dry for about 1 to 20 minutes before application of the clearcoat. The clearcoat is then applied to the surface of the basecoat, and the system can be allowed to dry at room temperature or, if desired, can be force dried by baking the coated substrate at temperatures typically ranging up to about 177°C (350°F).

Typically, the clearcoat may contain ultraviolet light absorbers such as hindered phenols or hindered amines at a level ranging up to about 6% by weight of the vehicle solids as is well known in the art. The clearcoat can be applied by any application method known in the art, but preferably will be spray applied. If desired, multiple layers of basecoat and/or clearcoat can be applied. Typically, both the basecoat and the clearcoat will each be applied to give a dry film thickness of about 0.254 (0.01) to about 152.4 (6), and especially about 12.7 (0.5) to about 76.2 (3.0) µm (mils).

If desired, the novel reactive compositions taught herein could be used as a basecoat, in which case the clearcoat could also comprise the novel reactive coatings taught herein, or the polymers taught herein as being useful as basecoat formulations could be utilized as clearcoats.

## Claims

1. A curable composition comprising:
(i) an anhydride-functional polymer having a number average weight of preferably at least 500 and having an average of at least two cyclic carboxylic acid anhydride groups per molecule and being the addition polymerization reaction product of maleic anhydride and at least one other copolymerizable ethylenically unsaturated monomer selected from esters of unsaturated acids, vinyl compounds, styrene-based materials, allyl compounds, unsaturated monomers having free carboxylic acid groups, acrylonitrile, methacrylonitrile, dimethyl maleate, isopropenyl acetate, isopropenyl isobutyrate, acrylamide, methacrylamide, dienes; and
(ii) an epoxy-functional compound; and
(iii) a hydroxy-functional compound having an average of at least two hydroxyl groups per molecule and being selected from an acrylic polymer or a polyester polymer;
wherein at least one of the compounds (i), (ii), or (iii) comprises a film-forming polymer, and where in the compounds are each present in a level to provide 0.3 to 6.0 hydroxyl groups and 0.3 to 6.0 epoxy groups for each anhydride group,
characterized in that the epoxy-functional compound has one epoxy group per molecule and is selected from monoglycidyl ethers of aliphatic or aromatic alcohols, monoepoxy esters, unsaturated monoepoxy esters, monoepoxidized oils, aryl monoepoxies and aliphatic monoepoxies.

2. The composition of claim 1 further characterized in that it also incorporates a catalyst for the reaction of anhydride and hydroxyl groups, preferably a tertiary amine, especially N-methylimidazole.

3. The composition of claim 1 further characterized in that it also incorporates a catalyst for the reaction of acid groups and epoxy groups, preferably triphenyl phosphine.

4. The composition of claim 1 further characterized in that compounds (i), (ii) and (iii) are each present at a level to provide 0.5 to 1.5 hydroxyl groups and 0.5 to 1.5 epoxy groups for each anhydride group.

5. The composition of claim 1 further characterized in that the anhydride-functional polymer is the addition polymerization reaction product of (a) 5 to 40 weight percent of maleic anhydride and (b) 60 to 95 weight percent of the at least one other ethylenically unsaturated monomer copolymerizable with maleic anhydride, and preferably the addition polymerization reaction product of (a) 5 to 40 weight percent of maleic anhydride; (b) 1 to 15 weight percent of an ethylenically unsaturated carboxylic acid monomer copolymerizable with maleic anhydride; and (c) 45 to 94 weight percent of the at least one ethylenically unsaturated monomer which is compolymerizable with maleic anhydride and the ethylenically unsaturated acid.

6. The composition of claim 5 further characterized in that the ethylenically unsaturated acid monomers and the ethylenically unsaturated copolymerizable monomers comprise 0 to 10 weight percent of the total monomer mixture of acrylate monomers.

7. The composition of claim 5 further characterized in that the ethylenically unsaturated acid monomers and the ethylenically unsaturated copolymerizable monomers are substantially free of acrylate functionality.

8. The composition of claim 1 further characterized in that the hydroxy-functional compound is a hydroxy-functional poolymer having a number average molecular weight of at least 400.

9. In a substrate coated with a multi-layer decorative and/or protective coating which comprises:
(a) a basecoat comprising a pigmented film-forming polymer; and
(b) a transparent clearcoat comprising a film-forming polymer applied to the surface of the basecoat composition;
the improvement which comprises utilizing as the clearcoat and/or the basecoat a multicomponent curable composition which is reactive upon mixing of the components, wherein the curable compositions comprises a composition according to claims 1 to 8.

## Patentansprüche

1. Härtbare Zusammensetzung, umfassend:
(i) ein anhydrid-funktionelles Polymeres, welches ein zahlendurchschnittliches Gewicht von vorzugsweise wenigstens 500 und durchschnittlich wenigstens zwei cyclische Carbonsäureanhydridgruppen pro Molekül besitzt, und das das Additionspolymerisationsreaktionsprodukt von Maleinsäureanhydrid und wenigstens einem anderen copolymerisierbaren, ethylenisch ungesättigten Monomeren ist, ausgewählt unter Estern von ungesättigten Säuren, Vinylverbindungen, Materialien auf Styrolbasis, Allylverbindungen, ungesättigten Monomeren mit freien Carbonsäuregruppen, Acrylnitril, Methacrylnitril, Dimethylmaleat, Isopropenylacetat, Isopropenylisobutyrat, Acrylamid, Methacrylamid, Dienen; und
(ii) eine epox-funktionelle Verbindung; und
(iii) eine hydroxy-funktionelle Verbindung, die durchschnittlich wenigstens zwei Hydroxylgruppen pro Molekül aufweist und ausgewählt ist aus einem Acrylpolymeren oder einem Polyesterpolymeren;
wobei wenigstens eine der Verbindungen (i), (ii) oder (iii) ein filmbildendes Polymeres umfaßt, und wobei die Verbindungen jeweils in einer Menge vorhanden sind, um 0,3 bis 6,0 Hydroxylgruppen und 0,3 bis 6,0 Epoxygruppen für jede Anhydridgruppe zur Verfügung zu stellen, dadurch gekennzeichnet, daß die epoxy-funktionelle Verbindung eine Epoxygruppe pro Molekül aufweist und ausgewählt ist unter Monoglycidylethern von aliphatischen oder aromatischen Alkoholen, Monoepoxyestern, ungesättigten Monoepoxyestern, monoepoxidierten Ölen, Arylmonoepoxyverbindungen und aliphatischen Monoepoxyverbindungen.

2. Zusammensetzung nach Anspruch 1, welche weiterhin dadurch gekennzeichnet ist, daß sie auch einen Katalysator für die Umsetzung von Anhydrid- und Hydroxylgruppen enthält, vorzugsweise ein tertiäres Amin, insbesondere N-Methylimidazol.

3. Zusammensetzung nach Anspruch 1, welche weiterhin dadurch gekennzeichnet ist, daß sie auch einen Katalysator für die Umsetzung von Säuregruppen und Epoxygruppen enthält, vorzugsweise Triphenylphosphin.

4. Zusammensetzung nach Anspruch 1, welche weiterhin dadurch gekennzeichnet ist, daß die Verbindungen (i), (ii) und (iii) jeweils in einer Menge vorhanden sind, daß 0,5 bis 1,5 Hydroxylgruppen und 0,5 bis 1,5 Epoxygruppen für jede Anhydridgruppe zur Verfügung gestellt werden.

5. Zusammensetzung nach Anspruch 1, welche weiterhin dadurch gekennzeichnet ist, daß das anhydrid-funktionelle Polymere das Additionspolymerisationsrekationsprodukt ist von (a) 5 bis 40 Gew.-% Maleinsäureanhydrid und (b) 60 bis 95 Gew.-% wenigstens eines anderen, ethylenisch ungesättigten Monomeren, das mit Maleinsäureanhydrid copolymerisierbar ist, und vorzugsweise das Additionspolymerisationreaktionsprodukt ist von (a) 5 bis 40 Gew.-% Maleinsäureanhydrid, (b) 1 bis 15 Gew.-% eines ethylenisch ungesättigten Carbonsäuremonomeren, welches mit Maleinsäureanhydrid copolymerisiert ist, und (c) 45 bis 94 Gew.-& wenigstens eines ethylenisch ungesättigten Monomeren, welches mit Maleinsäureanhydrid und der ethylenisch ungesättigten Säure copolymerisierbar ist.

6. Zusammensetzung nach Anspruch 5, welche weiterhin dadurch gekennzeichnet ist, daß die ethylenisch ungesättigten Säuremonomeren und die copolymerisierbaren, ethylenisch ungesättigten Monomeren 0 bis 10 Gew.-% der Gesamtmonomerenmischung der Acrylatmonomeren umfassen.

7. Zusammensetzung nach Anspruch 5, welche weiterhin dadurch gekennzeichnet ist, daß die ethylenisch ungesättigten Säuremonomeren und die copolymerisierbaren, ethylenisch ungesättigten Monomeren im wesentlichen frei von Acrylatfunktionalität sind.

8. Zusammensetzung nach Anspruch 1, welche weiterhin dadurch gekennzeichnet ist, daß die hydroxy-funktionelle Verbindung ein hydroxy-funktionelles Polymeres ist, das ein zahlendurchschnittliches Molekulargewicht von wenigstens 400 aufweist.

9. Ein Substrat, das mit einem Mehrschicht-Dekorations- und/oder -Schutzüberzug beschichtet ist, welcher umfaßt:
(a) einen Grundüberzug, umfassend ein pigmentiertes, filmbildendes Polymeres; und
(b) einen transparenten Klarüberzug, umfassend ein filmbildendes Polymeres, das auf die Oberfläche der Grundüberzugszusammensetzung aufgebracht ist;
dessen Verbesserung die Verwendung einer härtbaren Mehrkomponentenzusammensetzung, welche nach dem Mischen der Komponenten reaktiv ist, als Klarüberzug und/oder Grundüberzug umfaßt, wobei die härtbaren Zusammensetzungen eine Zusammensetzung nach den Ansprüchen 1 bis 8 umfassen.

## Revendications

1. Composition durcissable comprenant :
(i) un polymère à fonction anhydride présentant une masse moléculaire moyenne en nombre qui est de préférence d'au moins 500 et comportant en moyenne au moins deux groupes anhydride d'acide carboxylique cyclique par molécule et qui est un produit de réaction de polymérisation d'addition d'anhydride maléique et d'au moins un autre monomère à insaturation éthylénique copolymérisable avec lui choisi parmi les esters d'acides insaturés, les composés vinyliques, les matières à base de styrène, les composés allyliques, les monomères insaturés portant des groupes acides carboxyliques libres, l'acrylo-nitrile, le méthacrylonitrile, le maléate de diméthyle, l'acétate d'isopropényle, l'isobutyrate d'isopropényle, l'acrylamide, le méthacrylamide, les diènes ;
(ii) un composé à fonction époxy ; et
(iii) un composé à fonction hydroxy comportant au moins en moyenne deux groupes hydroxyle par molécule et étant choisi parmi un polymère acrylique ou un polymère de polyester ;
dans laquelle au moins l'un des composés (i), (ii) ou (iii) comprend un polymère filmogène, et dans laquelle les composés sont chacun présents en une quantité assurant la présence de 0,3 à 6,0 groupes hydroxyle et de 0,3 à 6,0 groupes époxy pour chaque groupe anhydride,
caractérisée en ce que le composé à fonction époxy comporte un groupe époxy par molécule et est choisi parmi les éthers monoglycidyliques des alcools aliphatiques ou aromatiques, les esters monoépoxy, les esters monoépoxy insaturés, les huiles monoépoxydées, les composés monoépoxy aryliques et monoépoxy aliphatiques.

2. Composition selon la revendication 1, encore caractérisée en ce qu'elle contient également un catalyseur pour la réaction entre l'anhydride et les groupes hydroxyle, de préférence une amine tertiaire, surtout le N-méthylimidazole.

3. Composition selon la revendication 1, également caractérisée en ce qu'elle contient aussi un catalyseur pour la réaction des groupes acides avec les groupes époxy, de préférence une triphénylphosphine.

4. Composition selon la revendication 1, également caractérisée en ce que chacun des composés (i), (ii) et (iii) est présent en une quantité permettant d'introduire de 0,5 à 1,5 groupe hydroxyle et de 0,5 à 1,5 groupe époxy pour chaque groupe anhydride.

5. Composition selon la revendication 1, caractérisée en ce que le polymère à fonction anhydride est le produit de réaction de polymérisation par addition de (a) 5 à 40 % en poids d'anhydride maléique et (b) de 60 à 95 % en poids d'au moins un autre monomère à insaturation éthylénique copolymérisable avec l'anhydride maléique, et de préférence, le produit de réaction de polymérisation par addition de (a) 5 à 40 % en poids d'anhydride maléique ; (b) de 1 à 15 % en poids d'un acide carboxylique à insaturation éthylénique copolymérisable avec l'anhydride maléique et (c) de 45 à 94 % en poids d'au moins un monomère à insaturation éthylénique qui est copolymérisable avec l'anhydride maléique et l'acide à insaturation éthylénique.

6. Composition selon la revendication 5, également caractérisée en ce que les monomères d' acides à insaturation éthylénique et les monomères à insaturation éthylénique copolymérisables avec eux comprennent de 0 à 10 % en poids du total du mélange des acrylates monomères.

7. Composition selon la revendication 5, également caractérisée en ce que les monomères d'acides à insaturation éthylénique et les monomères copolymérisables à insaturation éthylénique sont sensiblement exempts d'une fonctionnalité acrylate.

8. Composition selon la revendication 1, également caractérisée en ce que le composé à fonction hydroxy est un polymère à fonction hydroxy dont la masse moléculaire en nombre est d'au moins 400.

9. Dans un substrat revêtu d'un enduit ornemental et/ou protecteur à couches multiples qui comprend :
(a) un enduit de base comprenant un polymère filmogène pigmenté : et
(b) un enduit limpide transparent comprenant un polymère filmogène appliqué à la surface de la composition de l'enduit de base ;
le perfectionnement qui consiste à utiliser en qualité d'enduit limpide et/ou de l'enduit de base une composition durcissable à composants multiples qui est réactive quand on mélange les composants, les compositions durcissables comprenant une composition selon les revendications 1 à 8.
